# EUROPÄISCHE PATENTANMELDUNG

(11) **EP 3 421 862 A1**
(43) Veröffentlichungstag der Anmeldung: **02.01.2019**
(21) Anmeldenummer: 18179756.4
(22) Anmeldetag: 26.06.2018
(51) Int. Cl.: F16P 1/02

(54) **SICHERHEITSUMZÄUNUNG FÜR EINE MASCHINENANORDNUNG**

(30) Priorität: 27.06.2017 DE 102017114277
(71) Anmelder: Liebherr-Verzahntechnik GmbH, 87437 Kempten (DE)
(72) Erfinder: Zollitsch, Markus, 87490 Haldenwang (DE)
(74) Vertreter: Behr, Wolfgang

(57) **Zusammenfassung**

Die vorliegende Erfindung zeigt eine Sicherheitsumzäunung für eine Maschinenanordnung, welche einen ersten Maschinenbereich, einen zweiten Maschinenbereich und einen Verbindungsbereich zwischen dem ersten und dem zweiten Maschinenbereich aufweist, mit einer Zugangsbaugruppe, welche mindestens ein Türelement umfasst. Dabei ist vorgesehen, dass die Zugangsbaugruppe in einer ersten Stellung des Türelementes den ersten Maschinenbereich verschließt und einen Zugang zu dem Verbindungsbereich freigibt, so dass der zweite Maschinenbereich über den Verbindungsbereich zugänglich ist.

## Beschreibung

Die vorliegende Erfindung betrifft eine Sicherheitsumzäunung für eine Maschinenanordnung und eine Zugangsbaugruppe mit mindestens einem Türelement für eine solche Sicherheitsumzäunung.

Sicherheitsumzäunungen dienen dem sicheren Betrieb von Maschinenanordnungen, insbesondere für einen automatisierten Betrieb der Maschinenanordnung, und sollen verhindern, dass während des Betriebs der Maschinenanordnung Personen in den Bereich der Maschinenanordnung gelangen.

Bspw. für Wartungsarbeiten oder sonstige manuelle Eingriffe ist es jedoch notwendig, dass Personen Zugang zur Maschinenanordnung erhalten. Sicherheitsumzäunungen weisen daher üblicherweise Zugangsanordnungen mit einer Türe auf, über welche Personen in den Bereich der Maschinenanordnung gelangen können bzw. über welche Personen den Bereich der Maschinenanordnung verlassen können.

Ist bei bekannten Zugangsanordnungen die Tür geöffnet und die Maschinenanordnung daher zugänglich, muss der Betrieb der Maschinenanordnung komplett stillstehen, um Unfälle zu vermeiden. Gerade bei größeren Maschinenanordnungen mit mehreren Maschinenbereichen kann dies jedoch erhebliche Nachteile mit sich bringen, da auch dann, wenn Wartungsarbeiten nur einen Teil der Maschinenanordnung betreffen, die gesamte Maschinenanordnung stehen muss.

Aus der DE 20 2007 016 725 U1 und der DE 299 192 68 U1 sind Ladestationen für eine Maschinenanordnung bekannt, welche den Zugang zur der Maschinenanordnung verschließen, wenn die Ladestation von außen zugänglich ist und umgekehrt den Zugang zwischen der Ladestation und der Maschinenanordnung freigeben, wenn die Ladestation geschlossen ist. Hierdurch ist ein Beladen der Ladestation mit einem Werkstück möglich, ohne den Betrieb der Maschinenanordnung unterbrechen zu müssen.

Über den Spezialfall der Ladestationen hinaus sind jedoch keine Lösungen für Zugangsbaugruppen größerer Maschinenanordnungen bekannt.

Aufgabe der vorliegenden Erfindung ist es daher, eine Sicherheitsumzäunung für eine Maschinenanordnung, welche einen ersten Maschinenbereich, einen zweiten Maschinenbereich und einen Verbindungsbereich zwischen dem ersten und dem zweiten Maschinenbereich aufweist, zur Verfügung zu stellen, welche eine verbesserte Zugangsbaugruppe aufweist.

Diese Aufgabe wird erfindungsgemäß durch eine Sicherheitsumzäunung gemäß Anspruch 1 gelöst. Vorteilhafte Ausgestaltungen der vorliegenden Erfindung sind Gegenstand der Unteransprüche.

Die vorliegende Erfindung umfasst eine Sicherheitsumzäunung für eine Maschinenanordnung, wobei die Maschinenanordnung einen ersten Maschinenbereich, einen zweiten Maschinenbereich und einen Verbindungsbereich zwischen dem ersten und dem zweiten Maschinenbereich aufweist. Die Sicherheitsumzäunung umfasst eine Zugangsbaugruppe mit mindestens einem Türelement. Erfindungsgemäß ist vorgesehen, dass die Zugangsbaugruppe in einer ersten Stellung des Türelementes den ersten Maschinenbereich verschließt und einen Zugang zu dem Verbindungsbereich freigibt, so dass der zweite Maschinenbereich über den Verbindungsbereich zugänglich ist.

Die erfindungsgemäße Sicherheitsumzäunung bzw. Zugangsbaugruppe haben den Vorteil, dass bspw. zur Wartung des zweiten Maschinenbereichs nicht die gesamte Maschinenanordnung stillstehen muss. Vielmehr kann der erste Maschinenbereich, welcher durch die Zugangsbaugruppe in der ersten Türstellung verschlossen wird, weiter betrieben werden, und lediglich der zweite Maschinenbereich, welcher über den Verbindungsbereich zugänglich ist, gestoppt werden. Insbesondre bei großen Maschinenanordnungen kann hierdurch die Downtime des ersten Maschinenbereiches erheblich verringert werden.

In einer bevorzugten Ausgestaltung der vorliegenden Erfindung erlaubt die Zugangsbaugruppe den Zugang zu dem Verbindungsbereich und dem zweiten Maschinenbereich in der Form, dass eine Bedienperson den Verbindungsbereich und über diesen den zweiten Maschinenbereich betreten kann. In alternativen Ausgestaltungen der vorliegenden Erfindung sind der Verbindungsbereich und/oder der zweite Maschinenbereich über die Zugangsbaugruppe jedoch nur insoweit zugänglich, als eine Bedienperson von außen Zugriff auf den Verbindungsbereich und/oder den zweiten Maschinenbereich erhält, wie dies beispielsweise bei aus dem Stand der Technik bekannten Ladestationen für den Ladebereich der Fall ist.

Bevorzugt verschließt die Zugangsbaugruppe in einer zweiten Türstellung des Türelementes den Zugang zu dem Verbindungsbereich, so dass die Sicherheitsumzäunung den ersten Maschinenbereich, den zweiten Maschinenbereich und den Verbindungsbereich umzäunt. In der zweiten Türstellung kann daher die gesamte Maschinenanordnung betrieben werden, da sie von außen nicht mehr zugänglich ist.

Bevorzugt bildet das Türelement in der zweiten Türstellung einen Teil der den ersten Maschinenbereich, den zweiten Maschinenbereich und den Verbindungsbereich umzäunenden Sicherheitsumzäunung.

Weiterhin bevorzugt bildet das Türelement in der ersten Türstellung einen Teil der den ersten Maschinenbereich umzäunenden Sicherheitsumzäunung.

In einer bevorzugten Ausgestaltung der vorliegenden Erfindung trennt die Zugangsbaugruppe in der ersten Stellung des Türelementes den ersten Maschinenbereich von dem Verbindungsbereich. Insbesondere erfolgt dies dadurch, dass die Zugangsbaugruppe eine Schnittstelle und insbesondere einen Durchgang zwischen dem ersten Maschinenbereich und dem Verbindungsbereich verschießt.

Alternativ oder zusätzlich kann die Zugangsbaugruppe in einer zweiten Stellung des Türelementes eine Schnittstelle und insbesondre einen Durchgang zwischen dem ersten Maschinenbereich und dem Verbindungsbereich freigeben.

Die Schnittstelle zwischen dem ersten Maschinenbereich und dem Verbindungsbereich kann beispielsweise den Transport von Werkstücken zwischen dem ersten Maschinenbereich und dem Verbindungsbereich erlauben, ohne dass hierdurch notwendigerweise Bedienpersonen von dem ersten Maschinenbereich zu dem Verbindungsbereich gelangen.

Ist ein Durchgang vorgesehen, erlaubt dieser bevorzugt den Zugang für Bedienpersonen von dem Verbindungsbereich in den ersten Maschinenbereich, insbesondere in dem Sinne, dass Bedienpersonen von dem Verbindungsbereich durch den Durchgang in den ersten Maschinenbereich gelangen können.

In einer möglichen Ausgestaltung der vorliegenden Erfindung umfasst die Sicherheitsumzäunung einen ersten Umzäunungsbereich zur Umzäunung des ersten Maschinenbereichs und einen zweiten Umzäunungsbereich zum Umzäunen des zweiten Maschinenbereichs, wobei die Zugangsbaugruppe zwischen dem ersten und dem zweiten Umzäunungsbereich angeordnet ist. Insbesondere kann der zweite Umzäunungsbereich über die Zugangsbaugruppe an den ersten Umzäunungsberiech angeschlossen sein. Alternativ oder zusätzlich kann die Zugangsbaugruppe in der zweiten Stellung eine Umzäunung für den Verbindungsbereich bilden.

Bevorzugt bildet das Türelement in der ersten Türstellung zusammen mit dem ersten Umzäunungsbereich einen Teil einer den ersten Maschinenbereich umzäunenden Sicherheitsumzäunung, welche den zweiten Umzäunungsbereich nicht umfasst.

Alternativ oder zusätzlich kann das Türelement in einer zweiten Türstellung zusammen mit dem ersten und dem zweiten Umzäunungsbereich einen Teil einer gemeinsamen Sicherheitsumzäunung für den ersten Maschinenbereich, den Verbindungsbereich und den zweiten Maschinenbereich bilden.

In einer möglichen Ausgestaltung der vorliegenden Erfindung erlaubt die Zugangsvorrichtung nicht nur den Zugang zum Verbindungsbereich und von diesen aus zum zweiten Maschinenbereich, sondern auch einen Zugang zum ersten Maschinenbereich. Alternativ oder zusätzlich kann die Zugangsvorrichtung als Flucht-Auslass für den ersten und/oder zweiten Maschinenbereich dienen.

In einer bevorzugten Ausgestaltung der vorliegenden Erfindung weist die Zugangsvorrichtung eine dritte Stellung des Türelementes auf, in welcher die Zugangsvorrichtung eine Schnittstelle und insbesondere einen Durchgang zwischen dem ersten Maschinenbereich und dem Verbindungsbereich sowie den Zugang zu dem Verbindungsbereich freigibt, so dass der erste Maschinenbereich über den Verbindungsbereich verlassen werden kann. Bevorzugt kann in der dritten Stellung des Türelementes auch der zweite Maschinenbereich über den Verbindungsbereich verlassen werden.

In einer bevorzugten Ausführung der vorliegenden Erfindung handelt es sich bei dem Türelement der Sicherheitsumzäunung um eine Schwenktür. Besonders bevorzugt umfasst die Schwenktür ein Türblatt, welches um eine vertikale Schwenkachse schwenkbar ist.

Bevorzugt ist die Schwenktür von der zweiten Stellung über den Verbindungsbereich hinweg in die erste Stellung verschwenkbar.

Alternativ oder zusätzlich kann die Schwenktür von der zweiten Stellung in der Gegenrichtung in die dritte Stellung verschwenkbar sein.

Weiterhin alternativ oder zusätzlich kann die Schwenktür von dem Verbindungsbereich aus nach außen hin aufschwenkbar sein.

Weist die Schwenktür die oben näher beschriebenen drei Stellungen auf, so kann die Schwenktür bevorzugt von der ersten Stellung in die zweite Stellung und von dort aus weiter in die dritte Stellung geschwenkt werden, d.h. die zweite Stellung befindet sich zwischen der ersten und der dritten Schwenkstellung.

In einer weiteren bevorzugten Ausgestaltung der vorliegenden Erfindung weist die Zugangsbaugruppe zwei Türelemente auf. Bevorzugt gelten dabei für beide Türelemente jene Eigenschaften, welche oben im Hinblick auf das mindestens eine Türelement näher beschrieben wurden.

Besonders bevorzugt handelt es sich bei den beiden Türelementen um Türblätter einer Schwenktür.

In einer besonders bevorzugten Ausgestaltung der vorliegenden Erfindung umfasst die Zugangsgruppe als Türelemente zwei Flügel einer Flügel-Tür.

Sind zwei Türelemente vorgesehen, verschließen diese bevorzugt in der ersten Stellung den ersten Maschinenbereich gemeinsam. Alternativ oder zusätzlich geben die zwei Türelemente bevorzugt in der ersten Stellung einander gegenüberliegende Zugänge zu dem Verbindungsbereich frei. Weiterhin alternativ oder zusätzlich können die zwei Türelemente bevorzugt in einer zweiten Stellung einander gegenüberliegende Zugänge zu dem Verbindungsbereich verschließen.

Sind zwei Türelemente vorgesehen, so ist ein Türelement bevorzugt zwischen einem ersten Teil eines ersten Umzäunungsbereichs für den ersten Maschinenbereich und einem zweiten Umzäunungsbereich für den zweiten Maschinenbereich angeordnet und das zweite Türelement zwischen dem zweiten Umzäunungsbereich für den zweiten Maschinenbereich und einem zweiten Teil des ersten Umzäunungsbereichs für den ersten Maschinenbereich.

Insbesondere bilden die beiden Türelemente in der zweiten Stellung ein Teil einer gemeinsamen Umzäunung des ersten Maschinenbereichs, des Verbindungsbereichs und des zweiten Maschinenbereichs, welche in dieser Reihenfolge aus dem ersten Teil des ersten Umzäunungsbereichs, dem ersten Türelement, dem zweiten Umzäunungsbereich, dem zweiten Türelement und dem zweiten Teil des ersten Umzäunungsbereichs gebildet wird.

Sind zwei Türelemente vorgesehen, so sind diese bevorzugt in der ersten Stellung miteinander verriegelbar. Die Verriegelung erfolgt daher nicht an feststehenden Elementen, sondern unmittelbar zwischen den beiden Türelementen. Dies hat den Vorteil, dass ein größerer Durchgangsbereich ohne Hindernisse freibleibt, wenn sich die Türelemente in der zweiten Position befinden.

Insbesondere kann die Verriegelung der Türelemente miteinander über eine Verriegelungsanordnung mit auf den beiden Türelementen angeordneten Verriegelungselementen erfolgen, welche miteinander verriegeln.

Bevorzugt ist die Verriegelung über einen Elektromagneten und/oder mechanisch lösbar. Alternativ oder zusätzlich kann die Verriegelungsanordnung mindestens ein oder bevorzugt zwei Sicherheits-Positionsschalter umfassen.

In einer bevorzugten Ausgestaltung der Erfindung ist es mindestens ein Türelement in einer zweiten Stellung mit mindestens einem Rahmenelement der Zugangsbaugruppe verriegelbar. Bevorzugt ist das Rahmenelement in der den ersten Maschinenbereich, den Verbindungsbereich und den zweiten Maschinenbereich umzäunten Sicherheitsumzäunung angeordnet. Alternativ oder zusätzlich kann das Rahmenelement zwischen einem ersten Umzäunungsbereich für den ersten Maschinenbereich und einem zweiten Umzäunungsbereich für den zweiten Maschinenbereich vorgesehen sein.

Sind zwei Türelemente vorgesehen, so sind diese bevorzugt in einer zweiten Stellung mit separaten Rahmenelementen der Zugangsbaugruppe verriegelbar. Bevorzugt sind die separaten Rahmenelemente voneinander beabstandet in der Sicherheitsumzäunung angeordnet. Insbesondere können die Rahmenelemente für das erste und zweite Türelement auf gegenüberliegenden Seiten des Verbindungsbereichs vorgesehen sein. Hierdurch ist der Verbindungsbereich bevorzugt in der ersten Stellung von zwei gegenüberliegenden Seiten aus zugänglich.

Bevorzugt erfolgt die Verriegelung in der zweiten Stellung zumindest auch über ein Verriegelungselement, welches an dem Türelement angeordnet ist und auch in der ersten Stellung der Verriegelung des Türelementes dient. Besonders bevorzugt erfolgt bei der Verwendung zweier Türelemente die Verriegelung eines ersten Türelementes mit einem Rahmenelement in der zweiten Stellung zumindest auch über ein Verriegelungselement, welches an dem ersten Türelement angeordnet ist und in der ersten Türstellung der Verriegelung mit einem an dem zweiten Türelement angeordneten Verriegelungselement dient.

Alternativ oder zusätzlich kann die Verriegelung in der zweiten Stellung über einen Elektromagneten und/oder mechanisch lösbar sein. Weiterhin alternativ oder zusätzlich kann das Verriegelungselement ein Teil eines Sicherheits-Positionsschalters bilden.

Weiterhin bevorzugt ist mindestens ein Riegel vorgesehen, durch welchen das Türelement in der zweiten Stellung mit einem Rahmenelement verriegelbar ist. Besonders bevorzugt ist dieser Riegel zusätzlich zu einer elektromagnetisch lösbaren Verriegelungsanordnung vorgesehen.

Bevorzugt dient der Riegel in der ersten Stellung als Anschlag. Insbesondere kann beim Einsatz zweier Türelemente ein erstes der beiden Türelemente in der zweiten Stellung über einen Riegel mit einem Rahmenelement verriegelbar sein, wobei der Riegel in der ersten Stellung als Anschlag für das zweite Türelement dient. Auch das zweite Türelement kann einen solchen Riegel aufweisen, welcher in der ersten Stellung als Anschlag für das erste Türelement dient.

In einer bevorzugten Ausgestaltung erfolgt die Verriegelung in der zweiten Stellung zumindest auch über einen mechanischen Riegel: Besonders bevorzugt ist dieser von beiden Seiten des Türelementes aus bedienbar.

Alternativ oder zusätzlich kann der Riegel auf beiden Seiten des Türelementes verlaufende, durch die Tür hindurch verbundene Riegelelemente umfassen. Bevorzugt umfassen diese in der Verriegelungsstellung das Rahmenelement auf beiden Seiten. Alternativ oder zusätzlich kann an den Riegelelementen jeweils ein Griff angeordnet sein, über welchen der Riegel bedienbar ist.

In einer bevorzugten Ausgestaltung der vorliegenden Erfindung kann es sich bei dem oben beschriebenen Riegel um einen Schwenkriegel handeln. Besonders bevorzugt ist der Schwenkriegel über eine Schwenkachse schwenkbar an der Tür angeordnet.

Der Riegel kann durch sein Eigengewicht und/oder eine Federbeaufschlagung in eine Verriegelungsposition vorgespannt sein und entgegen der hierdurch erzeugten Kraft in eine Entriegelungsposition bewegbar sein.

Die vorliegende Erfindung umfasst weiterhin eine Zugangsbaugruppe mit mindestens einem Türelement für die oben beschriebene Sicherheitsumzäunung.

Insbesondere kann die Zugangsbaugruppe so ausgestaltet sein, dass sie in einer Stellung des Türelementes den ersten Maschinenbereich verschließt und einen Zugang zu dem Verbindungsbereich freigibt, sodass der zweite Maschinenbereich über den Verbindungsbereich zugänglich ist.

Weiter bevorzugt ist die Zugangsbaugruppe so ausgestaltet, wie dies oben im Hinblick auf die Sicherheitsumzäunung bereits beschrieben wurde.

Weiterhin umfasst die vorliegende Erfindung eine Maschinenanordnung mit einem ersten Maschinenbereich, einem zweiten Maschinenbereich und einem Verbindungsbereich, welche eine Sicherheitsumzäunung aufweist, wie sie oben beschrieben wurde.

In einer möglichen Ausgestaltung der vorliegenden Erfindung kann der erste Maschinenbereich eine Transportanordnung für Werkstücke umfassen. Bei dem zweiten Maschinenbereich kann es sich um eine Bearbeitungs- und/oder Handhabungsstation für Werkstücke handeln.

Bevorzugt sind Werkstücke durch den Verbindungsbereich hindurch von dem ersten zu dem zweiten Maschinenbereich transportierbar oder umgekehrt Werkstücke durch den Verbindungsbereich hindurch von dem zweiten zu dem ersten Maschinenbereich transportierbar.

Insbesondere kann bevorzugt ein Handhabungsgerät der Transportanordnung so ausgestaltet sein, dass es Werkstücke über den Verbindungsbereich hinweg in den zweiten Maschinenbereich transportieren oder von dort abholen kann.

In einer besonders bevorzugten Ausgestaltung der erfindungsgemäßen Maschinenanordnung umfasst der erste Maschinenbereich einen Palettenspeicher mit einer Transportanordnung für Paletten. Auf den Paletten sind bevorzugt Werkstücke angeordnet.

Die vorliegende Erfindung ist insbesondere auch für solche Maschinenanordnungen geeignet, welche einen ersten Maschinenbereich und mehrere zweite Maschinebereiche aufweisen. Insbesondere können mehrere Bearbeitungs- und/oder Handhabungsstationen an eine Transportanordnung angeschlossen sein. Bevorzugt weisen mehrere zweite Maschinenbereiche eine erfindungsgemäße Zugangsanordnung auf.

Wird im Rahmen der vorliegenden Erfindung in unterschiedlichen Zusammenhängen von einer zweiten Position des Türelementes gesprochen, so muss es sich nicht notwendigerweise um die gleiche Position handeln. Bevorzugt handelt es sich jedoch immer dann, wenn von einer zweiten Position gesprochen wird, um dieselbe Position. Gleiches gilt für die dritte Position des Türelementes.

Die vorliegende Erfindung wird nun anhand von Zeichnungen sowie Ausführungsbeispielen beschrieben. Dabei zeigen:
- Fig. 1:: ein Ausführungsbeispiel einer erfindungsgemäßen Sicherheitsumzäunung mit einem Ausführungsbeispiel einer erfindungsgemäßen Zugangsbaugruppe, wobei sich die Türelemente in der gezeigten Darstellung in der ersten Position befinden;
- Fig. 2:: das in Fig. 1 gezeigte Ausführungsbeispiel, wobei sich die Türelemente in der zweiten Position befinden;
- Fig. 3:: das in Fig. 1 und 2 gezeigte Ausführungsbeispiel, wobei sich die Türelemente in der dritten Position befinden;
- Fig. 4: eine Detaildarstellung der Verriegelungsanordnung zur Verriegelung zweier Türelemente miteinander;
- Fig. 5: das erfindungsgemäße Ausführungsbeispiel einer Sicherheitsumzäunung mit den Türelementen in der ersten Position in einer perspektivischen Darstellung ausgehend von dem ersten Maschinenbereich und
- Fig. 6: das erfindungsgemäße Ausführungsbeispiel einer Sicherheitsumzäunung mit den Türelementen in der zweiten Position in einer perspektivischen Darstellung ausgehend von dem ersten Maschinenbereich.

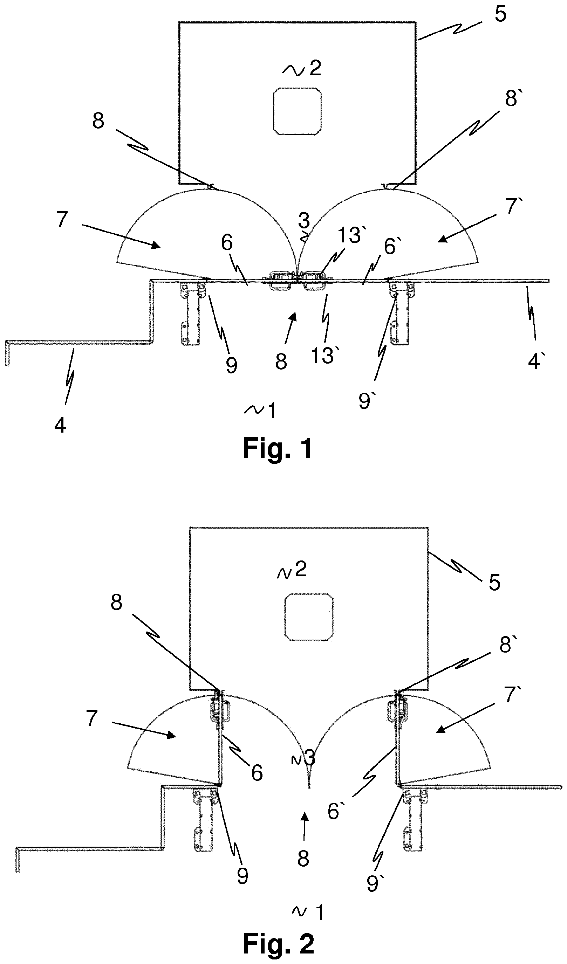

In Fig. 1 bis 6 ist ein Ausführungsbeispiel einer erfindungsgemäßen Sicherheitsumzäunung dargestellt. Die Sicherheitsumzäunung dient zur Umzäunung einer lediglich schematisch dargestellten Maschinenanordnung mit einem ersten Maschinenbereich 1, einem zweiten Maschinenbereich 2 und einem Verbindungsbereich 3 zwischen dem ersten Maschinenbereich 1 und dem zweiten Maschinenbereich 2.

In typischen Anwendungsfällen der vorliegenden Erfindung umfasst der erste Maschinenbereich einen ersten Teil der Maschinenanordnung, welcher im Prinzip auch ohne den im zweiten Maschinenbereich vorgesehenen Teil der Maschinenanordnung betrieben werden kann.

Beispielsweise kann im ersten Maschinenbereich eine Transport- und/oder Speicheranordnung für Werkstücke vorgesehen sein. Im zweiten Maschinenbereich kann beispielsweise eine Bearbeitungs- und/oder Handhabungsstation angeordnet sein. Insbesondere können mehrere zweite Maschinenbereiche über erfindungsgemäße Zugangsanordnungen an einen gemeinsamen ersten Maschinenbereich angebunden sein. Fällt daher einer der zweiten Maschinenbereiche aus, kann dieser durch einen anderen zweiten Maschinenbereich ersetzt werden.

Während des Betriebs der gesamten Maschinenanordnung dem aus ersten Maschinenbereich und einem oder mehreren zweiten Maschinenbereich(en) ist es üblicherweise erforderlich, dass der zweite Maschinenbereich und der erste Maschinenbereich miteinander verbunden sind. Insbesondere ist es üblicherweise erforderlich, dass Werkstücke zwischen dem ersten und dem zweiten Maschinenbereich ausgetauscht werden können. Weiterhin muss die Sicherheitsumzäunung in diesem Fall die gesamte Maschinenanordnung abschließen.

Die erfindungsgemäße Sicherheitsumzäunung ist nun so ausgestaltet, dass der erste Maschinenbereich weiter betrieben werden kann, wenn der zweite Maschinenbereich oder einer der zweiten Maschinenbereiche gewartet oder aus einem anderen Grund von einer Bedienperson betreten wird.

Im Ausführungsbeispiel weist der erste Maschinenbereich 1 einen ersten Umzäunungsbereich auf, welcher aus einem ersten Teilbereich 4 und einem zweiten Teilbereich 4' besteht. Ein zweiter Umzäunungsbereich 5 ist zur Umzäunung des zweiten Maschinenbereichs 2 vorgesehen. Der zweite Umzäunungsbereich 5 ist über die erfindungsgemäße Zugangsbaugruppe, welche im Verbindungsbereich 3 angeordnet ist, an den ersten Umzäunungsbereich 4, 4' angeschlossen.

Die Zugangsbaugruppe weist im Ausführungsbeispiel zwei Türelemente 6 und 6' auf. In alternativen Ausführungsbeispielen könnte jedoch auch nur eines der beiden Türelemente vorgesehen sein.

Fig. 1 zeigt die Türelemente 6 und 6' in einer ersten Stellung, in welcher sie den ersten Maschinenbereich 1 verschließen. Dabei bilden sie zusammen mit dem ersten Teilbereich 4 und dem zweiten Teilbereich 4' des ersten Umzäunungsbereiches eine Umzäunung für den ersten Maschinenbereich 1. Hierdurch kann der erste Maschinenbereich 1 in der ersten Stellung der Türelemente weiter betrieben werden, da er nach außen hin verschlossen ist.

Weiterhin ist in der ersten Stellung der Türelemente der Verbindungsbereich 3 über die Zugangsanordnung zugänglich. Über den Verbindungsbereich 3 ist daher auch der Zugang zu dem zweiten Maschinenbereich 2 möglich. Hierdurch ist beispielsweise eine Wartung von in dem zweiten Maschinenbereich 2 angeordneten Maschinen möglich.

Insbesondere verschließen die Türelemente 6 und 6' in der ersten Stellung einen Durchgang 8 zwischen dem ersten Maschinenbereich 1 und dem Verbindungsbereich 3. Sie geben dagegen Zugänge 7 und 7' von Außen zu dem Verbindungsbereich 3 frei, so dass dieser von außen zugänglich ist.

Von dem Verbindungsbereich 3 aus ist auch der zweite Maschinenbereich 2 zugänglich. Der Durchgang zwischen dem Verbindungsbereich 3 und dem zweiten Maschinenbereich 2 ist hierfür im Ausführungsbeispiel immer geöffnet, da zwischen dem Verbindungsbereich 3 und dem Maschinenbereich 2 keine Sicherheitsumzäunung und auch kein Türelement vorgesehen ist. Hierdurch ist ein Durchgang zwischen dem Verbindungsbereich und dem zweiten Maschinenbereich 2 unabhängig von der Stellung der Türelemente der Zugangsbaugruppe möglich.

Fig. 2 zeigt eine zweite Stellung der Türelemente 6 und 6', in welcher diese den Durchgang 8 zwischen dem ersten Maschinenbereich 1 und dem Verbindungsbereich 3 freigeben, und gleichzeitig die Zugänge 7 und 7' von Außen zum Verbindungsbereich schließen. Hierdurch kann die gesamte Maschinenanordnung betrieben werden. Durch den geöffneten Verbindungsbereich 3 hat die im ersten Maschinenbereich 1 angeordnete Maschinenanordnung daher Zugang zu dem ersten Maschinenbereich, insbesondere um Werkstücke vom ersten Maschinenbereich zum zweiten Maschinenbereich zu transportieren oder umgekehrt.

In der in Fig. 2 gezeigten zweiten Türstellung bilden die Türelemente 6 und 6' zusammen mit dem zweiten Umzäunungsbereich 5 und dem ersten Teilbereich 4 und zweitem Teilbereich 4' des ersten Umzäunungsbereichs eine zusammenhängende Sicherheitsumzäunung für die gesamte Maschinenanordnung mit dem ersten Maschinenbereich, dem Verbindungsbereich und dem zweiten Maschinenbereich.

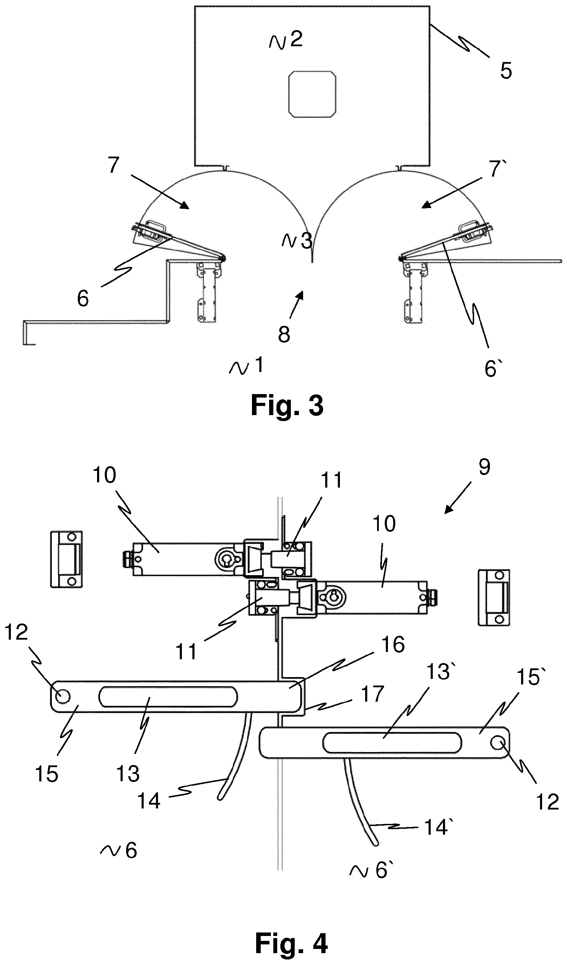

Fig. 3 zeigt eine dritte Stellung der Türelemente 6 und 6'. In dieser Stellung geben die Türelemente sowohl den Durchgang 8 zwischen dem ersten Maschinenbereich 1 und dem Verbindungsbereich 3, als auch die Zugänge 7 und 7' zu dem Verbindungsbereich 3 frei. Die Zugangsbaugruppe kann hierdurch als Ausgang oder Eingang, insbesondere als Flucht-Ausgang für den ersten Maschinenbereich genutzt werden.
Im Ausführungsbeispiel sind die Türelemente 6, 6' als Schwenktüren ausgestaltet, welche jeweils um eine vertikale Schwenkachse an Türlagern 9 bzw. 9' schwenkbar gelagert sind. Im Ausführungsbeispiel sind die Türlager 9 bzw. 9' der Türelemente 6 und 6' jeweils auf der dem ersten Maschinenbereich zugewandten Seite der Zugangsbaugruppe angeordnet und/oder schließen an den ersten Umzäunungsberiech 4, 4' an.

Im Ausführungsbeispiel sind die Türelemente 6 und 6' bei der in Fig. 3 gezeigten dritten Stellung nach außen geklappt. Hierdurch können sie von innen nach außen geöffnet werden, um den ersten Maschinenbereich über den Verbindungsbereich 3 und einen der Zugänge 7 oder 7' zu verlassen.

Die Zugänge 7 und 7' sind im Ausführungsbeispiel jeweils zwischen dem zweiten Umzäunungsbereich 5 und einem Teilbereich 4 bzw. 4' des ersten Umzäunungsbereichs angeordnet. Die Zugänge 7 und 7' werden bevorzugt durch Rahmenelemente gebildet, welche diese beiden Bereiche der Sicherheitsumzäunung miteinander verbinden und jeweils durch die Türelemente 6 bzw. 6' verschließbar sind.

Im Ausführungsbeispiel sind die Zugänge 7 und 7' auf einander gegenüberliegenden Seiten des Verbindungsbereichs 3 angeordnet.

In der in Fig. 1 dargestellten ersten Stellung sind die beiden Türelemente 6 und 6' miteinander verriegelbar, um den ersten Maschinenbereich 1 zu verschließen. Insbesondere erfolgt die Verriegelung der beiden Türelemente in der ersten Stellung ohne einen zwischen den Türelementen angeordneten Mittelpfosten, an welchem die Türelemente 6 und 6' in der ersten Stellung verriegelt würden. Dies hat zur Folge, dass in der in Fig. 2 dargestellten zweiten Stellung der Durchgang 8 zwischen dem ersten Maschinenbereich und dem Verbindungsbereich 3 komplett freigegeben werden kann.

In der zweiten Stellung, wie sie in Fig. 2 dargestellt ist, werden die Türelemente 6 und 6' dagegen an den Rahmenelementen 8 und 8' verriegelt. Bevorzugt erfolgt die Verriegelung auf Seiten des zweiten Umzäunungsbereichs 5.

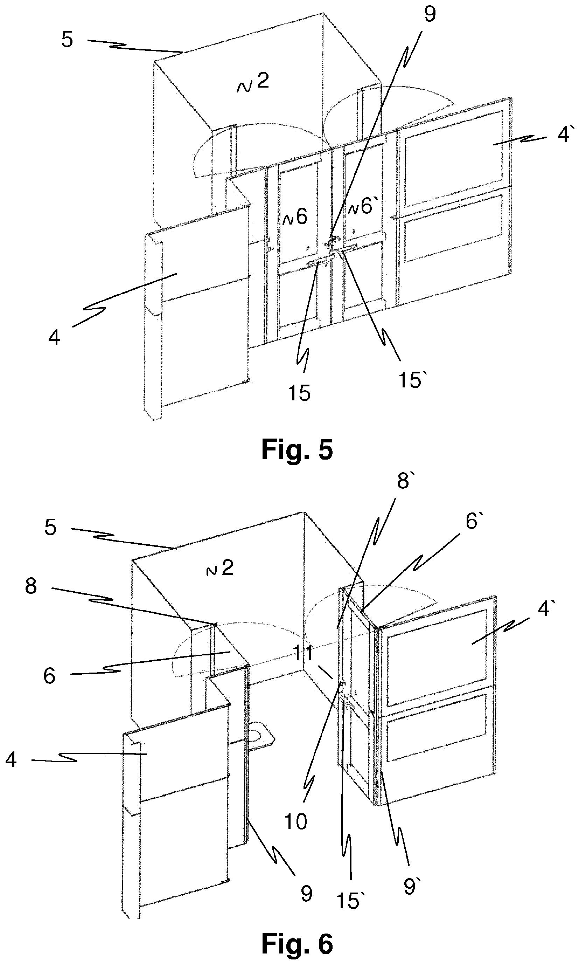

Der freie Durchgang zwischen dem ersten Maschinenbereich 1 über den Verbindungsbereich 3 zum zweiten Maschinenbereich 2 ist auch in Fig. 6 zu erkennen, welche die in Fig. 2 dargestellte zweite Stellung der Türelemente in einer perspektivischen Ansicht vom ersten Bereich aus wiedergibt. Fig. 5 zeigt dagegen den geschlossenen ersten Maschinenbereich in der auch in Fig. 1 dargestellten ersten Stellung der Türelemente.

Die konkrete Ausgestaltung der Verriegelungsanordnung, mit welcher die Türelemente 6 und 6' in der ersten Stellung miteinander verriegelt werden, ist in Fig. 4 näher dargestellt:
An dem ersten Türelement 6 ist ein Verriegelungselement 10 vorgesehen, welches mit einem Verriegelungselement 11, das an dem zweiten Türelement 6 angeordnet ist, verriegelbar ist. Bevorzugt handelt es sich bei dem ersten und dem zweiten Verriegelungselement um Teile eines Sicherheits-Positionsschalters. Dieser weist weiter bevorzugt einen Sensor auf, über welchen der Verriegelungszustand der Verriegelungselemente 10 und 11 überwacht werden kann.

Eines der beiden Verriegelungselemente 10 und 11 umfasst bevorzugt einen mittels Federkraft angetriebenen Betätiger. Insbesondere handelt es sich dabei um das zweite Verriegelungselement 11. Am ersten Verriegelungselement 10 kann dabei eine Wippe angeordnet sein, über welche der federbelastete Betätiger in eine Verriegelungsstellung mit dem ersten Verriegelungselement 10 gleitet. Um ein Durchschwingen zu erlauben, ist bevorzugt eine Doppelwippe mit Anlaufschrägen auf beiden Seiten des Türelementes vorgesehen.

Ebenfalls bevorzugt kann mindestens eines der Verriegelungselemente, insbesondere das erste Verriegelungselement 10, eine elektromagnetisch betätigbare Entriegelungs- und/oder Verriegelungsfunktion aufweisen.

Die Verriegelung der Verriegelungselemente 10 und 11 miteinander ist bevorzugt zur Notentriegelung mechanisch lösbar.

Im Ausführungsbeispiel sind sowohl am ersten Türelement 6 als auch am zweiten Türelement 6' jeweils ein erstes Verriegelungselement 10 angeordnet, welches mit einem am jeweils anderen Türelement angeordneten zweiten Verriegelungselement 11 verriegelt.

Weiterhin sind an den Rahmenelementen 8 und 8' ebenfalls zweite Verriegelungselemente 11 vorgesehen, welche in der in Fig. 2 und 6 dargestellten zweiten Stellung der Türelemente mit den an den Türelementen 6 und 6' angeordneten ersten Verriegelungselementen 10 verriegeln. Die ersten Verriegelungselemente 10 können daher sowohl zum Verriegeln der Türelemente 6 und 6' miteinander, als auch mit den Rahmenelementen 8 bzw. 8' genutzt werden.

Bevorzugt sind die zweiten Verriegelungselemente 11 an den Rahmenelementen 8 bzw. 8' genauso aufgebaut wie die zweiten Verriegelungselemente 11 an den Türelementen 6 bzw. 6'.

Bevorzugt wird jeweils die Verriegelungsstellung der zweiten Verriegelungselemente 11 über Sensoren überwacht, sodass über die Sensoren feststellbar ist, ob die Türelemente 6 bzw. 6' in der ersten Stellung oder in der zweiten Stellung verriegelt sind.

Die Verriegelung durch die Verriegelungselemente 11 und 11' ist bevorzugt zumindest von innen mechanisch lösbar, sodass die erfindungsgemäße Zugangsbaugruppe als auch als Fluchtausgang für die Maschinenbaugruppe dienen kann.

Die Zugangsbaugruppe weist weiterhin mechanisch betätigbare Riegelelemente 15 bzw. 15' auf. Diese sind im Ausführungsbeispiel beweglich an den Türelementen 6 bzw. 6' angeordnet und dienen in der zweiten, in Fig. 2 und 6 dargestellten Stellung der Verriegelung der Türelemente mit den Rahmenelementen 8 bzw. 8'.

In der in Fig. 4 dargestellten ersten Stellung der Türelemente können die Riegel 15 bzw. 15', welche an den Türelementen 6 und 6' angeordnet sind, dagegen als Anschlag für mindestens eines der Türelemente dienen.

Im Ausführungsbeispiel sind die Riegel 15 bzw. 15' als Schwenkriegel ausgestaltet, welche über eine horizontale Achse 12 an dem jeweiligen Türelement 6 bzw. 6' schwenkbar angeordnet sind. Die Türelemente 6 und 6' weisen weiterhin jeweils eine Führung 14 bzw. 14' auf, welche den Schwenkbereich des Riegels begrenzt.

Bevorzugt sind die Riegel jeweils über eine Feder mechanisch in die Verriegelungsstellung vorgespannt, und können gegen die Federkraft geöffnet werden. Alternativ oder zusätzlich ist es denkbar, dass die Riegel durch ihr Eigengewicht in der Verriegelungsstellung vorgespannt sind, und gegen ihr Eigengewicht geöffnet werden.

Im Ausführungsbeispiel weisen die Riegel jeweils auf beiden Seiten der Türen verlaufende Riegelelemente auf, welche zumindest über die Drehachse 12 durch die Tür hindurch miteinander verbunden sind. Bevorzugt sind die Riegelelemente auch durch einen Führungsstift miteinander verbunden, welcher durch ein als Führung dienendes, bogenförmiges Langloch 14 durch die Tür hindurch geht.

Die Riegelelemente weisen jeweils einen Griff 13 auf, durch welchen der Riegel von beiden Seiten der Türe aus betätigbar ist.

Die freien Enden 16 bzw. 16' der Riegel dienen in der zweiten, in Fig. 6 dargestellten Stellung der Verriegelung mit den Rahmenelementen 8 bzw. 8', und umschließen diese bevorzugt auf zwei Seiten.

In der in Fig. 4 dargestellten ersten Stellung der Türelemente können die freien Enden 16 bzw. 16' der Türelemente als Anschlag für das jeweils andere Türelement dienen. In einer möglichen Ausführungsform kann jedoch auch bloß der Riegel eines ersten Türelementes als Anschlag für das andere Türelement dienen, während im ersten Türelement eine Aussparung für das freie Ende 16 des anderen Riegels vorgesehen ist, um das Schließen der Türelemente in der ersten Stellung zu erleichtern. Eine solche Aussparung ist in Fig. 4 mit dem Bezugszeigen 17 gekennzeichnet und in dem zweiten Türelement 6' vorgesehen. Sie könnte jedoch auch in dem ersten Türelement 6 angeordnet sein.

In dem dargestellten Ausführungsbeispiel weist die Zugangsbaugruppe wie oben beschrieben zwei Türelemente auf, welche in Form einer Flügeltür arbeiten.

In alternativen, nicht in den Figuren dargestellten Ausgestaltungen der vorliegenden Erfindung könnte die Zugangsbaugruppe jedoch auch nur ein Türelement aufweisen. Dieses Türelement könnte genauso aufgebaut sein und/oder arbeiten wie eines der Türelemente 6 bzw. 6' der im Ausführungsbeispiel dargestellten Zugangsbaugruppe. Lediglich die Verriegelung in der ersten Stellung würde nicht an einem anderen Türelement, sondern an einem zusätzlichen Rahmenelement erfolgen.

Bevorzugt ist bei Verwendung nur eines Türelementes einer der beiden Teilbereiche 4, 4' des ersten Umzäunungsbereiches unmittelbar mit dem zweiten Umzäunungsbereich 5 verbunden statt über einen Zugang 7, 7'. Bevorzugt ist das zusätzliche Rahmenelement, an welchem die Verriegelung in der ersten Stellung erfolgt, dann zwischen dem entsprechenden Teilbereich des ersten Umzäunungsbereichs und dem zweiten Umzäunungsbereich angeordnet und mit diesen verbunden.

Ein Ausführungsbeispiel mit nur einem Türelement kann dann gewählt werden, wenn entweder der Durchgang 8 nur relativ schmal sein muss, oder der Verbindungsbereich 3 ohnehin so lang ist, dass ein Türblatt großer Länge eingesetzt werden kann.

Unabhängig von der konkreten konstruktiven Ausgestaltung erlaubt die Zugangsbaugruppe gemäß der vorliegenden Erfindung zum einen den Weiterbetrieb der im ersten Maschinenbereich angeordneten Maschinen, während die im zweiten Maschinenbereich angeordneten Maschinen bspw. für eine Wartung zugänglich sind. In der zweiten Stellung verschießt die Zugangsbaugruppe dagegen die gesamte im ersten Maschinenbereich, im Verbindungsbereich und im zweiten Maschinenbereich angeordnete Maschinenanordnung, so dass die Gesamtanlage betrieben werden kann.

Die vorliegende Erfindung erlaubt damit insbesondere das Abtrennen einer im zweiten Maschinenberiech angeordneten Maschine von einer größeren, im ersten Maschinenbereich angeordneten Anlage.

Weiterhin kann die Zugangsbaugruppe als Fluchtausgang für den ersten Maschinenbereich dienen, wofür bevorzugt eine dritte Stellung des Türelementes vorgesehen ist.

## Patentansprüche

1. Sicherheitsumzäunung für eine Maschinenanordnung, welche einen ersten Maschinenbereich, einen zweiten Maschinenbereich und einen Verbindungsbereich zwischen dem ersten und dem zweiten Maschinenbereich aufweist, mit einer Zugangsbaugruppe, welche mindestens ein Türelement umfasst, **dadurch gekennzeichnet,**
**dass** die Zugangsbaugruppe in einer ersten Stellung des Türelementes den ersten Maschinenbereich verschließt und einen Zugang zu dem Verbindungsbereich freigibt, so dass der zweite Maschinenbereich über den Verbindungsbereich zugänglich ist.

2. Sicherheitsumzäunung nach Anspruch 1, wobei die Zugangsbaugruppe in einer zweiten Türstellung des Türelementes den Zugang zu dem Verbindungsbereich verschließt, so dass die Sicherheitsumzäunung den ersten Maschinenbereich, den zweiten Maschinenbereich und den Verbindungsbereich umzäunt, wobei das Türelement in der zweiten Türstellung bevorzugt einen Teil der den ersten Maschinenbereich, den zweiten Maschinenbereich und den Verbindungsbereich umzäunenden Sicherheitsumzäunung bildet.

3. Sicherheitsumzäunung nach einem der vorangegangenen Ansprüche, wobei die Zugangsbaugruppe in der ersten Stellung des Türelementes den ersten Maschinenbereich von dem Verbindungsbereich trennt, insbesondere indem sie eine Schnittstelle und insbesondere einen Durchgang zwischen dem ersten Maschinenbereich und dem Verbindungsbereich verschließt und/oder wobei die Zugangsbaugruppe in einer zweiten Stellung des Türelementes eine Schnittstelle und insbesondere einen Durchgang zwischen dem ersten Maschinenbereich und dem Verbindungsbereich freigibt.

4. Sicherheitsumzäunung nach einem der vorangegangenen Ansprüche, wobei die Sicherheitsumzäunung einen ersten Umzäunungsbereich zur Umzäunung des ersten Maschinenbereichs und einen zweiten Umzäunungsbereich zum Umzäunen des zweiten Maschinenbereichs aufweist, wobei die Zugangsbaugruppe zwischen dem ersten Umzäunungsbereich und dem zweiten Umzäunungsbereich angeordnet ist, wobei bevorzugt das Türelement in der ersten Türstellung zusammen mit dem ersten Umzäunungsbereich einen Teil einer den ersten Maschinenbereich umzäunenden Sicherheitsumzäunung bildet, welche den zweiten Umzäunungsbereich nicht umfasst, und/oder wobei bevorzugt das Türelement in einer zweiten Türstellung zusammen mit dem ersten und dem zweiten Umzäunungsbereich einen Teil einer gemeinsamen Sicherheitsumzäunung für den ersten Maschinenbereich, den Verbindungsbereich und den zweiten Maschinenbereich bildet.

5. Sicherheitsumzäunung nach einem der vorangegangenen Ansprüche, wobei die Zugangsvorrichtung in einer dritten Stellung des Türelementes eine Schnittstelle und insbesondere einen Durchgang zwischen dem ersten Maschinenbereich und dem Verbindungsbereich und den Zugang zu dem Verbindungsbereich freigibt, so dass der erste Maschinenbereich über den Verbindungsbereich verlassen werden kann, wobei bevorzugt in der dritten Stellung des Türelementes auch der zweite Maschinenbereich über den Verbindungsbereich verlassen werden kann.

6. Sicherheitsumzäunung nach einem der vorangegangenen Ansprüche, wobei es sich bei dem Türelement um eine Schwenktür handelt, wobei die Schwenktür bevorzugt von der zweiten Stellung über den Verbindungsbereich hinweg in die erste Stellung verschwenkbar ist und/oder von der zweiten Stellung in der Gegenrichtung in die dritte Stellung verschwenkbar ist und/oder zur Notentriegelung von dem Verbindungsbereich aus nach außen hin aufschwenkbar ist.

7. Sicherheitsumzäunung nach einem der vorangegangenen Ansprüche, wobei die Zugangsbaugruppe zwei Türelemente und insbesondere zwei Flügel einer Flügel-Tür umfasst, welche bevorzugt in der ersten Stellung den ersten Maschinenbereich gemeinsam verschließen und/oder in der ersten Stellung einander gegenüberliegende Zugänge zu dem Verbindungsbereich freigeben und/oder in einer zweiten Stellung einander gegenüberliegende Zugänge zu dem Verbindungsbereich verschließen.

8. Sicherheitsumzäunung nach Anspruch 7, wobei die beiden Türelemente in der ersten Stellung miteinander verriegelbar sind, insbesondere über eine Verriegelungsanordnung mit auf den beiden Türelementen angeordneten Verriegelungselementen, welche miteinander verriegeln, wobei die Verriegelung bevorzugt über einen Elektromagnet und/oder mechanisch lösbar ist und/oder die Verriegelungsanordnung mindestens einen und bevorzugt zwei Sicherheits-Positionsschalter umfasst.

9. Sicherheitsumzäunung nach einem der vorangegangenen Ansprüche, wobei das mindestens eine Türelement in einer zweiten Stellung mit mindestens einem Rahmenelement der Zugangsbaugruppe verriegelbar ist, welches bevorzugt in der den ersten Maschinenbereich, den Verbindungsbereich und den zweiten Maschinenbereich umzäunenden Sicherheitsumzäunung und/oder zwischen einem ersten und einem zweiten Umzäunungsbereich vorgesehen ist, und/oder wobei die beiden Türelemente in einer zweiten Stellung mit separaten Rahmenelementen der Zugangsbaugruppe verriegelbar sind, welche bevorzugt voneinander beabstandet und weiter bevorzugt auf gegenüberliegenden Seiten des Verbindungsbereiches vorgesehen sind.

10. Sicherheitsumzäunung nach einem der vorangegangenen Ansprüche, wobei die Verrieglung in der zweiten Stellung zumindest auch über ein Verriegelungselement erfolgt, welches an dem Türelement angeordnet ist und auch in der ersten Stellung der Verriegelung des Türelementes dient, wobei bevorzugt bei der Verwendung zweier Türelemente die Verriegelung eines ersten Türelementes mit einem Rahmenelement in der zweiten Stellung zumindest auch über ein Verriegelungselement erfolgt, welches an dem ersten Türelement angeordnet ist und in der ersten Türstellung der Verriegelung mit einem an dem zweiten Türelement angeordneten Verriegelungselement dient und/oder wobei bevorzugt die Verriegelung über einen Elektromagnet und/oder mechanisch lösbar ist und/oder das Verriegelungselement einen Teil eines personensicheren Schalters bildet.

11. Sicherheitsumzäunung nach einem der vorangegangenen Ansprüche, wobei mindestens ein Riegel vorgesehen ist, durch welchen das Türelement in der zweiten Stellung mit einem Rahmenelement verriegelbar ist, wobei der Riegel bevorzugt in der ersten Stellung als Anschlag dient, wobei weiter bevorzugt beim Einsatz zweier Türelemente ein erstes der beiden Türelemente in der zweiten Stellung über einen Riegel mit einem Rahmenelement verriegelbar ist, welcher in der ersten Stellung als Anschlag für das zweite Türelement dient.

12. Sicherheitsumzäunung nach einem der vorangegangenen Ansprüche, wobei die Verriegelung in der zweiten Stellung zumindest auch über einen mechanischen Riegel erfolgt, welcher bevorzugt von beiden Seiten aus bedienbar ist und/oder bevorzugt auf beiden Seiten des Türelementes verlaufende, durch die Tür hindurch verbundene Riegelelemente umfasst, welche in der Verriegelungsstellung das Rahmenelement umfassen und/oder an welchen jeweils ein Griff angeordnet ist, und/oder wobei es sich bevorzugt um einen SchwenkRiegel handelt, welcher bevorzugt über eine Schwenkachse schwenkbar an der Tür angeordnet ist.

13. Zugangsbaugruppe mit mindestens einem Türelement für eine Sicherheitsumzäunung nach einem der vorangegangenen Ansprüche.

14. Maschinenanordnung mit einem ersten Maschinenbereich, einem zweiten Maschinenbereich und einem Verbindungsbereich, und mit einer Sicherheitsumzäunung nach einem der vorangegangenen Ansprüche, wobei bevorzugt der erste Maschinenbereich eine Transportanordnung für Werkstücke umfasst und/oder der zweite Maschinenbereich eine Bearbeitungs- und/oder Handhabungsstation für Werkstücke umfasst, und/oder wobei bevorzugt Werkstücke durch den Verbindungsbereich hindurch von dem ersten zu dem zweiten Maschinenbereich transportierbar sind und/oder durch den Verbindungsbereich hindurch von dem zweiten zu dem ersten Maschinenbereich transportierbar sind.

15. Maschinenanordnung nach Anspruch 14, wobei der erste Maschinenbereich einen Palettenspeicher mit einer Transportanordnung für die Paletten umfasst.
